# EUROPÄISCHE PATENTSCHRIFT

(11) **EP 4 400 286 B1**
(45) Veröffentlichungstag und Bekanntmachung des Hinweises auf die Patenterteilung: **29.01.2025**
(21) Anmeldenummer: 23217226.2
(22) Anmeldetag: 15.12.2023
(51) Int. Cl.: B29C 49/12, B29C 49/42, B29C 49/06, B29C 49/36, B29C 49/46, B29C 49/78, B29L 31/00

(54) **VERFAHREN UND BLASMASCHINE ZUM UMFORMEN VON KUNSTSTOFFVORFORMLINGEN ZU KUNSTSTOFFBEHÄLTNISSEN**
METHOD AND BLOW MOULDING MACHINE FOR FORMING PLASTIC PREFORMS INTO PLASTIC CONTAINERS
PROCÉDÉ ET MACHINE DE SOUFFLAGE POUR TRANSFORMER DES PRÉFORMES EN MATIÈRE PLASTIQUE EN RÉCIPIENTS EN MATIÈRE PLASTIQUE

(30) Priorität: 13.01.2023 DE 102023100739
(43) Veröffentlichungstag der Anmeldung: 17.07.2024
(73) Patentinhaber: KHS GmbH, 44143 Dortmund (DE)
(72) Erfinder: Gerhards, Martin, 22089 Hamburg (DE); Woytal, Cord, 27383 Scheeßel (DE)
(74) Vertreter: Andrejewski - Honke Patent- und Rechtsanwälte Partnerschaft mbB

(56) Entgegenhaltungen:
- EP-B1- 2 388 127
- DE-A1- 102008 038 141
- DE-U1- 202008 018 392
- US-A1- 2010 285 169

## Beschreibung

Die Erfindung betrifft ein Verfahren zum Umformen von Kunststoffvorformlingen zu Kunststoffbehältnissen in einer Blasmaschine, welche eine Vielzahl von Blasstationen aufweist, wobei jede Blasstation als Komponenten zumindest eine üblicherweise mehrteilige Blasform und eine Blasventilanordnung umfasst. Gegenstand der Erfindung ist auch eine entsprechende Blasmaschine, welche insbesondere zur Durchführung des Verfahrens geeignet ist.

Um hochwertige Flaschen aus PET (Polyethylenterephthalat) mit hervorragenden mechanischen, optischen und Barriereeigenschaften bei gleichzeitig niedrigem Gewicht herzustellen, sind aus der Praxis Verfahren und Blasmaschinen zum Umformen von Kunststoffvorformlingen zu Kunststoffbehältnissen bekannt. Zum allgemeinen Fachwissen wird hierzu auf das Fachbuch "Blasformen von Kunststoffhohlkörpern", M. Thielen, P. Gust, K. Hartwig, 2. Auflage 2020 (ISBN: 978-3-446-45552-8) verwiesen.

Geeignet ist im Rahmen der Erfindung insbesondere ein Streckblasverfahren, bei dem ein Kunststoffvorformling als Vorprodukt umgeformt wird. Bei dem bekannten Streckblasprozess wird der Kunststoffvorformling mit einer Reckstange in axialer Richtung verstreckt, wobei dann - beispielsweise nach einem ersten Kontakt der Reckstange mit dem Kunststoffvorformling - ein Vorblasdruck von beispielsweise 7 bar bis 15 bar hinzugeschaltet wird. Zu dem abschließenden Ausformen des Kunststoffbehältnisses, insbesondere in Form einer Flasche, wird dann der Fertigblasdruck von bis zu etwa 40 bar eingeleitet.

Moderne Blasmaschinen haben in der Regel Systeme für ein Recycling des Blasfluids, welches insbesondere in Form von gereinigter Druckluft bereitgestellt wird. Bei dem Entlasten des ausgeformten Kunststoffbehältnisses wird das Blasfluid dann auf einem gewissen Druckniveau, gegebenenfalls in Kaskaden, aufgenommen und dann für einen nachfolgenden Blasprozess, beispielsweise zur Erzeugung des Vorblasdrucks, verwendet. Mit entsprechenden Maßnahmen haben sich der Luftbedarf und damit der Energiebedarf für den Blasprozess erheblich reduziert.

Verfahren und Blasmaschinen, welche die Nutzung eines Recyclingstroms beschreiben, sind beispielsweise aus der EP 1 789 248 B1 und EP 3 888 884 B1 bekannt. Dabei ist zu beachten, dass selbst bei einem mehrstufigen Prozess, beispielsweise für die Bereitstellung des Vorblasdrucks, ein gewisser Mindestdruck bereitgestellt werden muss, der exemplarisch in einem Bereich von etwa 10 bar liegen kann. Vor diesem Hintergrund ist es bei dem genannten Stand der Technik vorgesehen, dass bei einem Entlasten eine Restmenge des Blasfluid bei Unterschreiten des angegebenen Drucks, beispielsweise über einen Schalldämpfer, abgelassen wird. Gemäß der US 2010/285169 A1 kann durch eine größere Anzahl von Ventilen eine effektivere Nutzung des Recyclingstroms bis zu einem kleineren Restdruck erreicht werden, wobei dann der entsprechend reduzierte Restdruck, beispielsweise über einen Schalldämpfer, abgelassen. Ein entsprechender Pfad wird auch als "exhaust" bezeichnet.

Um besonders empfindliche oder leicht verderbliche Füllprodukte handhaben zu können und/oder eine längere Lagerdauer zu erreichen, sind Vorrichtungen zum Behandeln von Kunststoffbehältnissen bekannt, die erhöhten Hygienestandards gerecht werden. Aus der EP 2 431 058 B1 und der DE 10 2008 038 141 A1 ist in diesem Zusammenhang eine Ausgestaltung bekannt, bei der die an einem Träger in Form eines Blasrades angeordneten Blasstationen der Blasmaschine gemeinsam in einer Schutzumhüllung angeordnet sind, welche als Reinraum oder Isolatorraum bezeichnet wird. Dem Isolatorraum als abgeschirmten Bereich kann dabei ein Sterilisationsmittel zugeführt werden.

Bei der Bereitstellung einer solchen Schutzumhüllung ist stets abzuwägen, welche Komponenten einer Blasstation bzw. der Blasmaschine darin angeordnet werden sollen. Umso mehr Komponenten gemeinsam in einer Schutzumhüllung angeordnet werden, umso aufwendiger ist eine Reinhaltung, insbesondere wenn auch Antriebe, bewegliche Teile, Anschlüsse, Leitungen oder dergleichen in einer großen Vielfalt innerhalb der Schutzumhüllung angeordnet sind. Gemäß der EP 2 431 058 B1 befindet sich beispielsweise an jeder Blassstation die Reckstange außerhalb der Schutzumhüllung, sodass zumindest über den Schaft der Reckstange ein Eintrag von Verunreinigungen in einem gewissen Maße nicht ausgeschlossen werden kann.

Vor diesem Hintergrund wird gemäß der EP 2 537 662 B1 vorgeschlagen, dass die Blasstationen einer Blasmaschine gemeinsam in einem Reinraum angeordnet sind, wobei die an jeder Blassstation vorgesehene Reckstange zusätzlich von einer Schutzumhüllung umgegeben ist und wobei der Reinraum durch ein Durchströmen der Schutzumhüllung der Reckstangen entlüftet wird.

Gemäß der EP 2 388 127 B1 können die Reckstangen in einer Umhausungen angeordnet sein, welche auch Abschnitte des Reinraums bilden. Innerhalb des Reinraums kann ein Sterilgas vorgesehen sein, welches gegenüber der Umgebung ein höheres Druckniveau aufweist.

Der vorliegenden Erfindung liegt die Aufgabe zugrunde, ein Verfahren und eine Blasmaschine zum Umformen von Kunststoffvorformlingen zu Kunststoffbehältnissen anzugeben, welche sich bei einem einfachen Aufbau durch eine verbesserte Effizienz auszeichnen.

Gegenstand der Erfindung und Lösung der Aufgabe sind ein Verfahren gemäß Patentanspruch 1 sowie eine Blasmaschine gemäß Patentanspruch 11.

Die Erfindung betrifft demnach gemäß einem ersten Aspekt ein Verfahren zum Umformen von Kunststoffvorformlingen zu Kunststoffbehältnissen in einer Blasmaschine, welche eine Vielzahl von Blasstationen aufweist, wobei jede Blasstation als Komponente zumindest eine üblicherweise mehrteilige Blasform und eine Blassventilanordnung umfasst, wobei für zumindest eine Komponente eine von einem Einlass durchströmbare Schutzumhüllung vorgesehen ist.

Bei dem Verfahren ist erfindungsgemäß vorgesehen, dass die Kunststoffvorformlinge jeweils an einer zugeordneten Blassstation für eine Aufweitung zu den Kunststoffbehältnissen in einem Blasprozess mit einem Blasfluid beaufschlagt werden, wobei nach der Ausformung des Kunststoffbehältnisses das unter Druck stehende Blasfluid zumindest teilweise als Recyclingstrom einer weiteren Verwendung zugeführt wird und wobei zumindest ein Teil des Recyclingstroms dem Einlass der Schutzumhüllung zugeführt wird.

Erfindungsgemäß ist demnach vorgesehen, dass der Recyclingstrom zumindest teilweise, vorzugsweise lediglich teilweise für ein Durchströmen der Schutzumhüllung genutzt wird. Dabei liegt der Erfindung die Erkenntnis zugrunde, dass die üblicherweise vor dem Blasprozess gereinigte Blasluft auch nach dem Blasprozess für viele Anwendungen noch in einer ausreichenden Reinheit vorliegt, um eine hygienische Umgebung innerhalb der Schutzumhüllung bereitzustellen. Auf ein separates Gebläse oder dergleichen für das Durchströmen der Schutzumhüllung kann somit im Rahmen der Erfindung verzichtet werden.

Gemäß einer bevorzugten Ausgestaltung der Erfindung ist vorgesehen, dass lediglich ein Niederdruckanteil des Recyclingstroms der zumindest einen Schutzumhüllung zugeführt wird. Dabei kann es sich insbesondere auch um den Anteil des nach dem Blasprozess abgelassenen Blasfluids handeln, welcher gemäß dem Stand der Technik bei einem vergleichsweise niedrigen Druck ungenutzt abgegeben wurde.

Insbesondere kann ein Hochdruckanteil des Recyclingstroms in bekannter Weise einem nachfolgenden Blasprozess als Blasfluid bzw. als Teil des insgesamt benötigten Blasfluids zugeführt werden, wodurch insgesamt in Kombination der Maßnahmen ein besonders geringer Bedarf an Blasfluid, insbesondere in Form von Blasluft, und Energie für das Komprimieren des Blasfluids resultieren.

Wie beschrieben kann der Recyclingstrom oberhalb eines vorgegebenen Referenzdrucks als Hochdruckanteil und unterhalb des Referenzdrucks als Niederdruckanteil genutzt werden, wobei der Referenzdruck je nach Verfahrensführung beispielsweise in einem Bereich zwischen 7 bar und 14 bar, insbesondere zwischen 10 bar und 12 bar festgelegt sein kann. Selbstverständlich kann der angegebene Referenzdruck auch im Rahmen einer Prozessoptimierung je nach Anforderungen unterschiedlich festgelegt werden.

Im Rahmen der Erfindung kann für die Komponenten mehrerer Blassstationen eine gemeinsame Schutzumhüllung vorgesehen sein, wobei eine solche Ausgestaltung beispielsweise aus der EP 2 431 058 B1 bekannt ist.

Gemäß einer bevorzugten Ausgestaltung der Erfindung ist jedoch zusätzlich oder alternativ vorgesehen, dass für jede der Blassstationen zumindest eine separate Schutzumhüllung vorgesehen ist, der zumindest ein Teil des Recyclingstroms zugeführt wird. So ist es insbesondere möglich, dass jede Schutzumhüllung nur an jeweils einer zugeordneten Blasstation angeordnet ist und auf jedwede gemeinsame Schutzumhüllung für mehrere oder alle Blasstationen verzichtet wird, was einen vergleichsweise einfachen Aufbau ohne Schleusen oder der gleichen ermöglicht.

Beispielsweise können die Blassstationen für ein kombiniertes Streckblasen jeweils als weitere Komponente eine Reckstange umfassen, wobei dann an jeder Blasstation beispielsweise jeweils eine Schutzumhüllung für die Reckstange vorgesehen sein kann. Dabei ist es auch möglich, dass die Reckstange die einzige Komponente jeder Blasstation ist, welche mit einer Schutzumhüllung versehen ist.

Ausgehend von dem beschriebenen Grundprinzip ergeben sich für das erfindungsgemäße Verfahren und die auch nachfolgend noch weiter beschriebene Blasmaschine weitere Ausgestaltungsmöglichkeiten.

Ausgehend von einer üblichen Bauform, bei der die Blassstation an einem gemeinsamen Träger, insbesondere einem Blasrad, angeordnet sind kann, der an den einzelnen Blassstationen anfallende Recyclingstrom vollständig an der jeweiligen Blasstation weiter genutzt werden, wobei dann gegebenenfalls auch die Speicherung in zumindest einem Ausgleichstank möglich ist. Wenn der gesamte Recyclingstrom an der jeweiligen Blasstation genutzt wird, müssen dann zwischen dem Träger und den einzelnen Blasstationen nur vergleichsweise wenige Leitungen vorgesehen sein.

Alternativ kann vorgesehen sein, dass der Recyclingstrom oder ein Teil des Recyclingstroms zu dem Träger geleitet wird, sodass dort beispielsweise über eine Ringleitung eine Verteilung erfolgen kann. Dabei ist zu berücksichtigen, dass die an dem gemeinsamen Träger angeordneten Blasstationen jeweils in einem anderen Zeitintervall des Blassprozesses sind, sodass bei einer zentralen Verteilung der Recyclingstrom insgesamt gleichmäßiger anfällt und für eine weitere Nutzung genutzt gleichmäßiger wieder abgeführt werden kann. Insbesondere kann bei einer solchen zentralen Verteilung eine besonders gleichmäßige Verfahrensführung auch durch einen einzigen Ausgleichstank erreicht werden.

Es versteht sich, dass für den zuvor beschriebenen Hochdruckanteil sowie den zuvor beschriebene Niederdruckanteil bei Bedarf eine unterschiedliche Handhabung zentral über den Träger oder direkt an der jeweiligen Blasstation erfolgen kann.

Auch die Schutzumhüllung kann im Rahmen der Erfindung unterschiedlich ausgeführt sein. Die Schutzumhüllung weist im Rahmen der Erfindung zumindest eine Trennwand auf, um den geschützten Bereich von der Umgebung abzuschotten.

Die Schutzumhüllung kann dabei gemäß einer Variante der Erfindung ausgehend von dem Einlass eine vergleichsweise offene Struktur haben, wobei der an dem Einlass in die Schutzumhüllung einströmende Recyclingstrom in Richtung eines offen ausgestalteten Auslassbereiches fließt. Selbst wenn bei einer offenen Ausgestaltung nur ein geringer Differenzdruck zu einer Umgebung vorliegt, kann alleine durch die Strömungsrichtung des entsprechenden Recyclingstroms der geschützte Bereich in einem gewissen Maße vor Verunreinigungen geschützt werden. Auch in diesem Zusammenhang ergibt sich der Vorteil, dass im Rahmen der Erfindung auch vergleichsweise niedrige Drücke bei der Entlüftung des fertiggestellten Kunststoffbehältnisses genutzt werden können, wobei für die Bereitstellung der gewünschten Strömung ein gegebenenfalls nur geringfügiger Überdruck gegenüber der Umgebung bereitgestellt werden muss.

Alternativ ist es möglich, dass die zumindest eine Schutzumhüllung zwischen dem Einlass und einem Auslass im Wesentlichen dicht ist. Im Rahmen einer solchen Ausgestaltung kann innerhalb der Schutzumhüllung ein gewisser Überdruck erreicht werden, welcher beispielsweise auch Spalte, Dichtungen oder definierte Drosselstellen sauber hält und für definierte Strömungsverhältnisse sorgt.

Gemäß einem weiteren Aspekt kann vorgesehen sein, dass der Einlass und/oder der Auslass verschließbar sind, wobei dann auch eine intermittierende Durchströmung der Schutzhülle vorgesehen sein kann. Eine solche intermittierende Durchströmung kann insbesondere dann zweckmäßig sein, wenn die Schutzumhüllung im Wesentlichen dicht ist. Durch ein Verschließen des Auslasses kann dann der Bedarf an wiedergewonnener Blasluft aus dem Recyclingstrom reduziert werden, wobei durch einen Überdruck in der Schutzumhüllung der Eintritt von Verschmutzungen vermieden werden kann. Des Weiteren können gegebenenfalls anfallende Verschmutzungen durch ein regelmäßiges Ablassen durch den Auslass in einem intermittierenden Betrieb abgeführt werden.

Gegenstand der Erfindung ist auch eine Blasmaschine zum Umformen von Kunststoffvorformlingen zu Kunststoffbehältnissen mit einer Vielzahl von Blasstationen, wobei jede Blasstation als Komponenten zumindest eine Blasform und eine Blasventilanordnung umfasst, wobei für zumindest eine Komponente eine von einem Einlass durchströmbare Schutzumhüllung vorgesehen ist und wobei eine Rückführleitung ein Auslassventil der Blassanordnung mit dem Einlass der durchströmbaren Schutzumhüllung verbindet.

Die Blasmaschine ist insbesondere zur Durchführung des zuvor beschriebenen Verfahrens vorgesehen, wobei sich auch aus der Beschreibung des Verfahrens bevorzugte strukturelle Merkmale der Blasmaschine ergeben.

Im Rahmen der Erfindung kann vorgesehen sein, dass für die Durchströmung der Schutzumhüllung lediglich der Recyclingstrom bzw. ein Anteil des Recyclingstroms vorgesehen ist, wobei gerade der zuvor beschriebene Niederdruckanteil dabei einer vorteilhaften Nutzung zugeführt werden kann.

Um jedoch unabhängig von konkreten Betriebsparametern und Einstellungen stets eine Durchströmung der Schutzumhüllung sicherzustellen, kann auch vorgesehen sein, dass der Einlass der durchströmbaren Schutzumhüllung zusätzlich über eine absperrbare Zuflussleitung an eine Blassluftzufuhr angeschlossen ist. Sofern dann nicht im ausreichenden Maße wiedergewonnene Blasluft aus dem Recyclingstrom bereitgestellt wird, kann frische Blasluft für das Durchströmen der Schutzumhüllung genutzt werden.

Wie auch bereits zuvor erläutert, kann die Rückführleitung einen Ausgleichstank aufweisen. Zusätzlich oder alternativ kann es auch zweckmäßig sein, in der Rückführleitung zumindest einen Filter vorzusehen, um eine weitere Reinigung des Recyclingstroms zu ermöglichen. Beispielsweise ist es nicht ausgeschlossen, dass Verschmutzungen in Form von Staub oder dergleichen durch die Kunststoffvorformlinge eingetragen werden und dann bei dem Blasprozess in die Blasluft übergehen. Entsprechende Verunreinigungen können dann mit einem geeigneten Filter zurückgehalten werden.

Um entgegen der vorgesehenen Strömungsrichtung einen Rückstrom zu vermeiden, können im Rahmen der Erfindung Rückschlagventile vorgesehen sein. Insbesondere können an unterschiedlichen Abschnitten auch Sperrventile vorgesehen sein.

So ist gemäß einer bevorzugten Ausgestaltung der Erfindung vorgesehen, dass die zumindest eine Schutzumhüllung einen Auslass und eine an den Auslass anschließende Ablassleitung mit einem Rückschlagventil und/oder einem Sperrventil aufweist. Die Auslassleitung kann dann beispielsweise in einem Ablassventil oder einem Schalldämpfer münden, um den Recyclingstrom im Rahmen der Erfindung nach dem zusätzlichen Durchströmen der Schutzumhüllung schließlich nach einer optimalen Ausnutzung an die Umgebung abzugeben.

Die Erfindung wird nachfolgend anhand einer Figur erläutert.

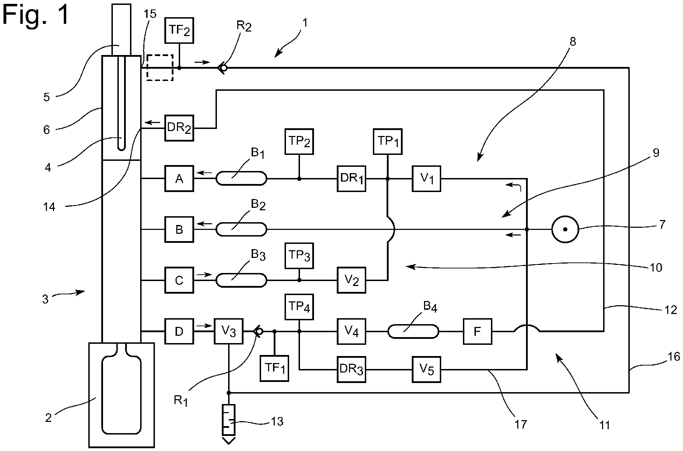

Die einzige Figur zeigt in einer stark schematisierten Darstellung eine Blasmaschine zum Umformen von Kunststoffvorformlingen zu Kunststoffbehältnissen.

Die einzige Figur zeigt in einer stark schematisierten Ansicht ein Teil einer Blasmaschine zum Umformen von Kunststoffvorformlingen zu Kunststoffbehältnissen.

Von der Blasmaschine ist eine Blasstation 1 dargestellt, welche als Komponenten eine Blasform 2, eine Blasventilanordnung 3, eine Reckstange 4 mit Antrieb 5 und eine Schutzumhüllung 6 um die Reckstange 4 aufweist.

Die Schutzumhüllung 6 dient dazu, um die bei einem Streckblasprozess ein- und ausfahrbare Reckstange 4 gegenüber Verunreinigungen zu schützen. In diesem Zusammenhang versteht es sich auch, dass die dargestellten Komponenten bei der rein schematischen Darstellung nicht maßstabsgerecht sind und insbesondere die Blasventilanordnung 3 zur besseren Übersichtlichkeit im Verhältnis überproportional groß dargestellt ist.

Frische Blasluft wird über einen nicht dargestellten Träger, insbesondere ein Blasrad, über eine Blasluftzufuhr 7 zugeführt, bei der die Blasluft mit einem Arbeitsdruck von beispielsweise etwa 40 bar bereitgestellt wird.

In an sich bekannter Weise sind für den Blasprozess ausgehend von der Blasluftzufuhr 7 rein exemplarisch ein Vorblaszweig 8, ein Fertigblaszweig 9 und ein erster Recyclingzweig 10 vorgesehen.

Der Vorblaszweig 8 umfasst ein Ventil V₁, einen Drucksensor TP₁, einen Druckreduzierer DR₁, einen weiteren Drucksensor TP₂, einen Puffertank B₁ und schließlich ein Einlassventil A. Über den Vorblaszweig 8 wird bei dem Streckblasverfahren ein Vorblasdruck eingeleitet, während die Reckstange 4 in die Blasform 2 einfährt und dabei einen nicht dargestellten Kunststoffvorformling entlang der Längsrichtung dehnt.

Nachfolgend erfolgt dann ein Fertigblasen über den Fertigblaszweig 9, der in dem dargestellten Ausführungsbeispiel lediglich einen Puffertank B₂ und ein Einlassventil B aufweist.

Während der Vorblaszweig 8 und der Fertigblaszweig 9 für das Ausformen des Kunststoffbehältnisses vorgesehen sind, ermöglichen der erste Recyclingzweig 10 sowie ein zweiter Recyclingzweig 11 eine Nutzung des unter Druck stehenden Blasfluids nach der Ausformung des Kunststoffbehältnisses als Recyclingstrom.

Ein Hochdruckanteil oberhalb eines beispielsweise im Bereich zwischen 7 bar und 14 bar liegenden Referenzdrucks wird dann nach dem Ausformen des Kunststoffbehältnisses zurückgeführt und bei einem nachfolgenden Blasprozess für das Vorblasen eingesetzt. Der erste Recyclingzweig 10 weist hierzu ausgeheng von einem Auslassventil C entlang der Strömungsrichtung einen Puffertank B₃, einen Drucksensor TP₃ und ein Ventil V₂ auf und mündet dann in den Vorblaszweig 8.

In diesem Zusammenhang versteht sich, dass die Darstellung nur schematisch ist, wobei die Nutzung des Recyclingstroms für einen nachfolgenden Blasprozess auch mehrstufig auf verschiedenen Druckniveaus erfolgen kann.

Zu beachten ist auch, dass die Darstellung von Vorblaszweig 8, Fertigblaszweig 9, erstem Recyclingzweig 10 und zweitem Recyclingzweig 11 sich auf lediglich eine einzige Blasstation 1 beziehen kann. Die beschriebenen Zweige können alle oder teilweise jedoch auch für die verschiedenen Blasstationen 1 untereinander verbunden sein. Bezogen auf die gesamte Blasmaschine wird dann beispielsweise die an einer Blasstation 1 in dem ersten Recyclingzweig 10 als Hochdruckanteil des Recyclingstroms zurückgewonnene Blasluft verteilt und dabei insbesondere auch für einen nachfolgenden Blasprozess an einer anderen Blasstation 1 genutzt.

Erfindungsgemäß wird auch ein Niederdruckanteil des Recyclingstroms genutzt und hierzu über den zweiten Recyclingzweig 11 abgeführt. Hierzu ist zunächst ein Auslassventil D vorgesehen, bevor an einem Ventil V₃ eine Verzweigung vorgesehen ist. Ausgehend von diesem Ventil V₃ kann der Niederdruckanteil des Recyclingstroms über eine Rückführleitung 12 zu der Schutzumhüllung 6 oder zu einem Schalldämpfer 13 bzw. Ablassventil geleitet werden, um dort an die Umgebung abgegeben zu werden. An dem beschriebenen Ventil V₃ ist grundsätzlich auch eine Aufteilung von Teilströmen für die angeschlossenen Zweige möglich.

In dem zweiten Recyclingzweig 11 befinden sich entlang der Strömungsrichtung ein Rückschlagventil R₁, ein Strömungssensor TF₁, ein Drucksensor TP₄ ein Ventil V₄, ein Puffertank B₄, ein Filter F und schließlich vor einem Einlass 14 ein Druckreduzierer DR₂.

Der Niederdruckanteil des Recyclingstroms wird somit dazu genutzt, die Schutzumhüllung 6 bei einer im Wesentlichen dichten Bauform von dem Einlass 14 zu einem Auslass 15 zu durchströmen, wodurch aufgrund der Strömung Verunreinigungen abgeführt werden und innerhalb der Schutzumhüllung ein Überdruck erzeugt wird.

Um einen Überdruck innerhalb der Schutzumhüllung 6 einzustellen und/oder eine intermittierende Durchströmung zu erreichen, kann in einer an den Auslass 15 anschließenden Ablassleitung 16 eine lediglich gestrichelt dargestellte Drossel oder ein weiteres Ventil vorgesehen sein.

Zur Überwachung der Durchströmung kann in der Ablassleitung 16 ein Strömungssensor die TF₂ vorgesehen sein, wobei auch in der Ablassleitung 16 zweckmäßigerweise ein Rückschlagventil R₂ vorhanden ist.

Die Ablassleitung 16 mündet schließlich in den bereits zuvor beschriebenen Schalldämpfer 13.

Um unabhängig von der Rückführung des Niederdruckanteils des Recyclingstroms über das Ablassventil D des zweiten Recyclingzweigs 11 stets eine ausreichende Durchströmung der Schutzumhüllung 6 sicherstellen zu können, ist im dargestellten Ausführungsbeispiel eine optional vorgesehene absperrbare Zuführleitung 17 vorgesehen, welche die Blasluftzufuhr 7 über ein Ventil V₅ und einen Druckreduzierer DR₃ zu dem zweiten Recyclingzweig 11 führt. Bei Bedarf ist es somit möglich, die Schutzumhüllung 6 bei mit frischer Blasluft zu durchströmen.

### Bezugszeichen

1 Blasstation
2 Blasform
3 Blasventilanordnung
4 Reckstange
5 Antrieb
6 Schutzumhüllung
7 Blasluftzufuhr
8 Vorblaszweig
9 Fertigblaszweig
10 erster Recyclingzweig
11 zweiter Recyclingzweig
12 Rückführleitung
13 Schalldämpfer
14 Einlass
15 Auslass
16 Ablassleitung
17 Zuführleitung
V₁, V₂, V₃, V₄, V₅ Ventil
TP₁, TP₂, TP₃, TP₄ Drucksensor
TF₁, TF₂ Strömungssensor
DR₁, DR₂, DR₃ Druckreduzierer
B₁, B₂, B₃, B₄ Puffertank
R₁, R₂ Rückschlagventil
F Filter
A Einlassventil
B Einlassventil
C Auslassventil
D Auslassventil

## Patentansprüche

1. Verfahren zum Umformen von Kunststoffvorformlingen zu Kunststoffbehältnissen in einer Blasmaschine, welche eine Vielzahl von Blasstationen (1) aufweist, wobei jede Blasstation (1) als Komponenten zumindest eine Blasform (2) und eine Blasventilanordnung (3) umfasst und wobei für zumindest eine Komponente eine von einem Einlass (14) durchströmbare Schutzumhüllung (6) vorgesehen ist,
wobei die Kunststoffvorformlinge jeweils an einer zugeordneten Blasstation (1) für eine Aufweitung zu dem Kunststoffbehältnis in einem Blasprozess mit einem Blasfluid beaufschlagt werden,
wobei nach der Ausformung des Kunststoffbehältnisses das unter Druck stehende Blasfluid als Recyclingstrom zumindest teilweise einer weiteren Verwendung zugeführt wird und
wobei zumindest ein Teil des Recyclingstroms dem Einlass (14) der Schutzumhüllung (6) zugeführt wird.

2. Verfahren nach Anspruch 1, wobei ein Hochdruckanteil des Recyclingstroms einem nachfolgenden Blasprozess als Blasfluid zugeführt wird und wobei ein Niederdruckanteil des Recyclingstroms der Schutzumhüllung (6) zugeführt wird.

3. Verfahren nach Anspruch 2, wobei der Recyclingstrom oberhalb eines vorgegebenen Referenzdrucks als Hochdruckanteil und unterhalb des Referenzdrucks als Niederdruckanteil genutzt wird, wobei der Referenzdruck in einem Bereich zwischen 7 bar und 14 bar, insbesondere zwischen 10 bar und 12 bar liegt.

4. Verfahren nach Anspruch 1 bis 3, wobei für jede der Blasstationen (1) zumindest eine separate Schutzumhüllung (6) vorgesehen ist, der zumindest ein Teil des Recyclingstroms zugeführt wird.

5. Verfahren nach Anspruch 4, wobei die Blasstationen (1) für ein kombiniertes Streckblasen jeweils als weitere Komponente eine Reckstange (4) umfassen, die in der Schutzumhüllung (6) angeordnet ist.

6. Verfahren nach einem der Ansprüche 1 bis 5, wobei bei jeder Blasstation (1) der Schutzumhüllung (6) lediglich von der Blasventilanordnung (3) der entsprechenden Blasstation (1) zumindest ein Teil des Recyclingstroms direkt zugeführt wird.

7. Verfahren nach einem der Ansprüche 1 bis 5, wobei die Blasstationen (1) an einem gemeinsamen Träger angeordnet sind, wobei der dem Einlass (14) der zumindest einen Schutzumhüllung (6) zugeführte Gasstrom über den Träger geleitet wird.

8. Verfahren nach einem der Ansprüche 1 bis 7, wobei die zumindest eine Schutzumhüllung (6) zwischen dem Einlass (14) und einem Auslass (15) im Wesentlichen dicht ist.

9. Verfahren nach Anspruch 8, wobei der Einlass (14) und/oder der Auslass (15) verschließbar sind und die zumindest eine Schutzumhüllung (6) intermittierend durchströmt wird.

10. Verfahren nach einem der Ansprüche 1 bis 8, wobei die zumindest eine Schutzumhüllung (6) ausgehend von dem Einlass (14) kontinuierlich durchströmt wird.

11. Blasmaschine zum Umformen von Kunststoffvorformlingen zu Kunststoffbehältnissen, zur Durchführung eines Verfahren nach einem der Ansprüche 1 bis 10, mit einer Vielzahl von Blasstationen (1), wobei jede Blasstation (1) als Komponenten zumindest eine Blasform (2) und eine Blasventilanordnung (3) umfasst, wobei für zumindest eine Komponente eine von einem Einlass (14) durchströmbare Schutzumhüllung (6) vorgesehen ist und wobei eine Rückführleitung (12) ein Auslassventil (D) der Blasventilanordnung (3) mit dem Einlass (14) der durchströmbaren Schutzumhüllung (6) verbindet.

12. Blasmaschine nach Anspruch 11, wobei der Einlass (14) der durchströmbaren Schutzumhüllung (6) zusätzlich über eine absperrbare Zuführleitung (17) an eine Blasluftzufuhr (7) angeschlossen ist.

13. Blasmaschine nach Anspruch 11 oder 12, wobei die Rückführleitung (12) einen Ausgleichstank (B₄) und/oder einen Filter (F) aufweist.

14. Blasmaschine nach einem der Ansprüche 11 bis 13, wobei die zumindest eine Schutzumhüllung (6) einen Auslass (15) und eine an den Auslass (15) anschließende Ablassleitung (16) mit einem Rückschlagventil (R₂) und/oder Sperrventil aufweist.

## Claims

1. A method for forming plastic preforms into plastic containers in a blow moulding machine which has a plurality of blow moulding stations (1), wherein each blow moulding station (1) comprises at least a blow mould (2) and a blow moulding valve assembly (3) as components and wherein a protective sheath (6) which can be perfused from an inlet (14) is provided for at least one component,
wherein a blow moulding fluid is applied to each plastic preform at an associated blow moulding station (1) for an expansion into the plastic container in a blow moulding process,
wherein after moulding of the plastic container, at least part of the blow moulding fluid which is under pressure is supplied to a further application as a recycling stream, and
wherein at least a portion of the recycling stream is supplied to the inlet (14) of the protective sheath (6).

2. The method as claimed in claim 1, wherein a high pressure fraction of the recycling stream is supplied to a subsequent blow moulding process as blow moulding fluid and wherein a low pressure fraction of the recycling stream is supplied to the protective sheath (6).

3. The method as claimed in claim 2, wherein the recycling stream above a specified reference pressure is used as the high pressure fraction and below the reference pressure is used as the low pressure fraction, wherein the reference pressure is in a range between 7 bar and 14 bar, in particular between 10 bar and 12 bar.

4. The method as claimed in claims 1 to 3, wherein for each of the blow moulding stations (1), at least one separate protective sheath (6) is provided to which at least a portion of the recycling stream is supplied.

5. The method as claimed in claim 4, wherein for combined stretch blow moulding, the blow moulding stations (1) respectively comprise a stretching rod (4) as a further component, which is disposed in the protective sheath (6).

6. The method as claimed in one of claims 1 to 5, wherein for each blow moulding station (1), at least a portion of the recycling stream from only the blow moulding valve assembly (3) of the corresponding blow moulding station (1) is supplied directly to the protective sheath (6).

7. The method as claimed in one of claims 1 to 5, wherein the blow moulding stations (1) are disposed on a common carrier, wherein the stream of gas supplied to the inlet (14) of the at least one protective sheath (6) is routed via the carrier.

8. The method as claimed in one of claims 1 to 7, wherein the at least one protective sheath (6) is substantially leakproof between the inlet (14) and an outlet (15).

9. The method as claimed in claim 8, wherein the inlet (14) and/or the outlet (15) can be sealed off and the at least one protective sheath (6) is intermittently perfused.

10. The method as claimed in one of claims 1 to 8, wherein the at least one protective sheath (6) is continuously perfused starting from the inlet (14).

11. A blow moulding machine for forming plastic preforms into plastic containers for carrying out a method as claimed in one of claims 1 to 10, with a plurality of blow moulding stations (1) wherein each blow moulding station (1) comprises at least one blow mould (2) and a blow moulding valve assembly (3) as components, wherein a protective sheath (6) which can be perfused from an inlet (14) is provided for at least one component and wherein a return line (12) connects an outlet valve (D) of the blow moulding valve assembly (3) to the inlet (14) of the protective sheath (6) which can be perfused.

12. The blow moulding machine as claimed in claim 11, wherein the inlet (14) of the protective sheath (6) which can be perfused is additionally connected to a blow moulding air supply (7) via a supply line (17) which can be shut off.

13. The blow moulding machine as claimed in claim 11 or claim 12, wherein the return line (12) has a surge tank (B₄) and/or a filter (F).

14. The blow moulding machine as claimed in one of claims 11 to 13, wherein the at least one protective sheath (6) has an outlet (15) and a drain line (16) with a non-return valve (R₂) and/or check valve connected to the outlet (15).

## Revendications

1. Procédé de formage de préformes en matière plastique en contenants en matière plastique dans une souffleuse, laquelle comporte une pluralité de postes de soufflage (1), chaque poste de soufflage (1) comprenant en tant que composants au moins un moule de soufflage (2) et un ensemble (3) de vannes de soufflage et pour au moins un composant étant prévue une gaine de protection (6) pouvant être traversée par une entrée (14),
les préformes en matière plastique étant exposées chacune sur un poste de soufflage (1) qui lui est affecté à un fluide de soufflage pour un élargissement, afin de former le contenant en matière plastique dans le cadre d'un processus de soufflage,
après le démoulage du contenant en matière plastique, le fluide de soufflage placé sous pression étant amené au moins en partie en tant que flux recyclé vers une autre utilisation et
au moins une partie du flux recyclé étant amenée vers l'entrée (14) de la gaine de protection (6).

2. Procédé selon la revendication 1, une fraction haute pression du flux recyclé étant amenée en tant que fluide de soufflage vers un processus de soufflage suivant et une fraction basse pression du flux recyclé étant amenée vers la gaine de protection (6).

3. Procédé selon la revendication 2, le flux recyclé étant utilisé en tant que fraction haute pression au-delà d'une pression de référence prédéfinie et en tant que fraction basse pression en-dessous de la pression de référence, la pression de référence se situant dans un ordre compris entre 7 bar et 14 bar, notamment entre 10 bar et 12 bar.

4. Procédé selon la revendication 1 à 3, pour chacun des postes de soufflage (1) étant prévue au moins une gaine de protection (6) séparée, vers laquelle est amenée au moins une partie du flux recyclé.

5. Procédé selon la revendication 4, pour un soufflage mixte avec étirage, les postes de soufflage (1) comprenant chacun en tant que composant supplémentaire une tige d'étirage (4) qui est placée dans la gaine de protection (6).

6. Procédé selon l'une quelconque des revendications 1 à 5, sur chaque poste de soufflage (1) de la gaine de protection (6), uniquement de l'ensemble (3) de vannes de soufflage du poste de soufflage (1) correspondant étant amenée directement au moins une partie du flux recyclé.

7. Procédé selon l'une quelconque des revendications 1 à 5, les postes de soufflage (1) étant placés sur un support commun, le flux gazeux amené vers l'entrée (14) de l'au moins une gaine de protection (6) étant dirigé par l'intermédiaire du support.

8. Procédé selon l'une quelconque des revendications 1 à 7, l'au moins une gaine de protection (6) étant sensiblement étanche entre l'entrée (14) et une sortie (15).

9. Procédé selon la revendication 8, l'entrée (14) et / ou la sortie (15) pouvant se fermer et l'au moins une gaine de protection (6) étant traversée par intermittence.

10. Procédé selon l'une quelconque des revendications 1 à 8, l'au moins une gaine de protection (6) étant traversée en continu en partant de l'entrée (14).

11. Souffleuse, destinée au formage de préformes en matière plastique en contenants en matière plastique pour la réalisation d'un procédé selon l'une quelconque des revendications 1 à 10, pourvue d'une pluralité de postes de soufflage (1), chaque poste de soufflage (1) comprenant en tant que composants au moins un moule de soufflage (2) et un ensemble (3) de vannes de soufflage, pour au moins un composant étant prévue une gaine de protection (6) pouvant être traversée par une entrée (14) et une conduite de retour (12) reliant une vanne de sortie (D) de l'ensemble (3) de vannes de soufflage avec l'entrée (14) de la gaine de protection (6) susceptible d'être traversée.

12. Souffleuse selon la revendication 11, l'entrée (14) de la gaine de protection (6) susceptible d'être traversée étant raccordée additionnellement par l'intermédiaire d'une conduite d'alimentation (17) pouvant être bloquée sur une alimentation (7) d'air de soufflage.

13. Souffleuse selon la revendication 11 ou 12, la conduite de retour (12) comportant un réservoir de compensation (B₄) et / ou un filtre (F).

14. Souffleuse selon l'une quelconque des revendications 11 à 13, l'au moins une gaine de protection (6) comportant une sortie (15) et une conduite d'évacuation (16) se raccordant sur la sortie (15), pourvue d'un clapet antiretour (R₂) et / ou d'une vanne d'arrêt.
